# EUROPÄISCHE PATENTSCHRIFT

(11) **EP 0 964 139 B1**
(45) Veröffentlichungstag und Bekanntmachung des Hinweises auf die Patenterteilung: **28.08.2002**
(21) Anmeldenummer: 99107867.6
(22) Anmeldetag: 21.04.1999
(51) Int. Cl.: F02D 19/10, F02M 45/08

(54) **Brennkraftmaschine**
Internal combustion engine
Moteur à combustion interne

(30) Priorität: 13.06.1998 DE 19826477
(43) Veröffentlichungstag der Anmeldung: 15.12.1999
(73) Patentinhaber: Caterpillar Motoren GmbH & Co. KG, 24159 Kiel (DE)
(72) Erfinder: Zigan, Detlef, Dr., 24111 Kiel (DE); Nagel, Jürgen, 24214 Gettorf (DE); Schlemmer-Kelling, Udo, West Lafayette, IN 47906 (US); Mooser, Dirk, Dr., 24223 Raisdorf (DE)
(74) Vertreter: Hansmann, Dierk, Dipl.-Ing.

(56) Entgegenhaltungen:
- EP-A- 0 546 985
- DE-A- 3 824 467
- DE-A- 4 115 457
- US-A- 4 831 993

## Beschreibung

Die Erfindung bezieht sich auf eine Brennkraftmaschine zum wahlweisen Betrieb mit Dieselöl oder gasförmigen Kraftstoff über Einspritzpumpen mit Brennstoffeinspritzdüsen zur Direkteinspritzung über verteilte Düsenlöcher zur zweistufigen Brennstoffzuführung.

Aus der DE 195 05 127 C1 ist ein Zündstrahl-Gasmotor bekannt, der mit einer Einspritzanlage zur Zuführung von Dieselkraftstoff in einen Brennraum oder mehreren Brennräumen versehen ist und eine Einrichtung zur Zuführung gasförmigen Kraftstoffs in den oder die Brennräume aufweist. Zur abgestimmten Dosierung des Dieselkraftstoffs und gasförmigen Kraftstoffs ist eine Einrichtung vorgesehen, wobei über ein Einspritzventil dem Brennraum Dieselkraftstoff und gasförmiger Kraftstoff zugeführt werden kann.

Desweiteren ist aus der EP-A1 0 546 985 ein Brennstoff-Einspritzventil für eine Brennkraftmaschine zum wahlweisen Betrieb mit Dieselöl oder mit einem gasförmigen Brennstoff bekannt. Das Einspritzventil weist über seinen Umfang verteilt Düsenlöcher auf. Jeder Reihe von Düsenlöchern ist eine mit einem Ventilsitz zusammenwirkende Ventilnadel zugeordnet, von dem die erste im Zentrum des Ventilkörpers angeordnet ist und die zweite Ventilnadel als Hohlnadel ausgeführt ist. Die erste Ventilnadel dient zum Einspritzen von Dieselöl und die zweite Ventil-Hohlnadel ist zur Zuführung von gasförmigen Brennstoff vorgesehen.

Der Erfindung liegt die Aufgabe zugrunde, einen Diesel-Gasmotor zu schaffen, der eine niedrige Schadstoffemission gewährleistet.

Diese Aufgabe wird erfindungsgemäß durch die Merkmale des Anspruchs 1 gelöst. Weitere vorteilhafte Ausbildungen sind durch die Merkmale der Unteransprüche gekennzeichnet.

Mit der Erfindung wird in vorteilhafter Weise ein Diesel-Gasmotor mit geringen Abgasemissionswerten, insbesondere von wesentlich herabgesetzten NOx-Werten erzielt. Dieser Motor ist zum wahlweisen Betrieb mit Dieselöl oder gasförmigen Brennstoff ausgelegt. Über Einspritzpumpen mit Brennstoffeinspritzventilen zur Direkteinspritzung über verteilte Düsenlöcher in den Einspritzdüsen ist eine zweistufe Brennstoffzuführung möglich. Bei Gasbetrieb wird der gasförmige Brennstoff mit der Ladeluft zugeführt, wobei zusätzlich ein Zündstrahl mit Dieselöl über eine Stufe des Einspritzventils zugeführt wird. Die Düsenlöcher dieser Stufe für den Dieselöl-Zündstrahl sind vorzugsweise im Bereich von ≤ 1% der Gesamtenergie bemessen. Bei Dieselbetrieb wird ausschließlich Dieselöl verwendet und dieses ist vorzugsweise über die Düsenlöcher der Brennstoffeinspritzventile beider Stufen zuführbar.

Gemäß einer Ausgestaltung der erfindungsgemäßen Brennkraftmaschine kann die zweistufige Brennstoffzuführung über ein Einspritzventil erfolgen, das getrennte Steuerorgane für die Einspritzdüse aufweist, die den einzelnen Kraftstoffaustrittsbereichen zugeordnet sind und aus einer Nadel in Nadel-Ausführung besteht.

So erfolgt über einen Kegelsitz einer Einspritzdüse eine Abdichtung, in dem ein Steuerorgan durch eine federbelastete Hülse mit einem den Kegelsitz zugeordneten Absperrkegel für den oberen Kraftstoffaustrittsbereich gebildet wird und eine federbelastete, sich abstützende Nadel mit einem Absperrkegel in der Hülse konzentrisch angeordnet ist und einem Kegelsitz im unteren Kraftstoffaustrittsbereich zugeordnet ist und die Absperrkegel durch den im Druckraum herrschenden Druck steuerbar sind. Die Einspritzdüsen können auch in der Weise angeordnet sein, daß die Ventilnadeln parallel oder annähernd parallel zueinander angeordnet sind.

Eine Druckerzeugung erfolgt durch nockengetriebene Einspritzpumpen je Zylinder. Die Nockenhubkurven sind so gestaltet, daß zunächst Stufe 1 aktiv ist und bei größeren Mengen bzw. Drücken wird zusätzlich noch die Stufe 2 aktiviert. Die Stufe 1 kann durch eine variable Schließkraft so verändert werden, daß ein hoher Einspritzdruck erzielt werden kann.

Eine andere Möglichkeit an Stelle einer nockengetriebenen Einspritzpumpe besteht darin, die Einspritzanlage über ein Common-Rail-System zu betreiben in dem der Dieselkraftstoff mit wählbar hohem Druck speicherbar ist. Die Dosierung der Einspritzmenge des Kraftstoffs erfolgt mittels gesteuerter Ventile.

Zur Steuerung des Betriebszustandes der Brennkraftmaschine sind elektrische Steuergeräte bzw. Steuereinheiten vorgesehen, die über Parameter der in Betrieb befindlichen Brennkraftmaschine ansteuerbar sind und die Brennkraftmaschine entsprechend mit Dieselkraftstoff oder Gaskraftstoff versorgen.

Ein Ausführungsbeispiel der Erfindung ist in den Zeichnungen dargestellt und wird im folgenden näher beschrieben. Es zeigen:

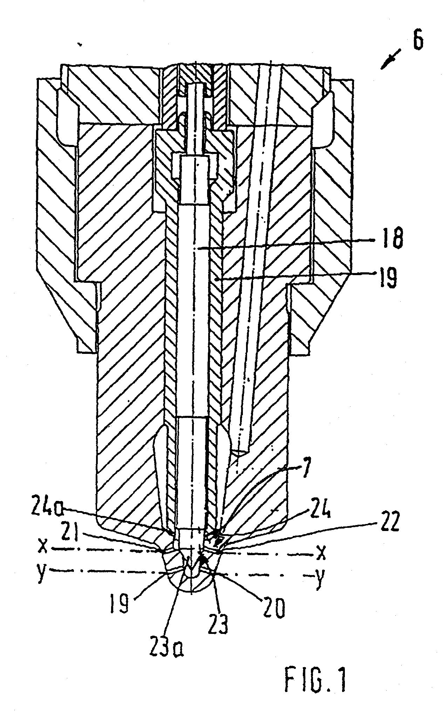

- Fig. 1: eine Schnittdarstellung eines Einspritzventils mit Nadel und Nadel angeordneter Einspritzdüse und

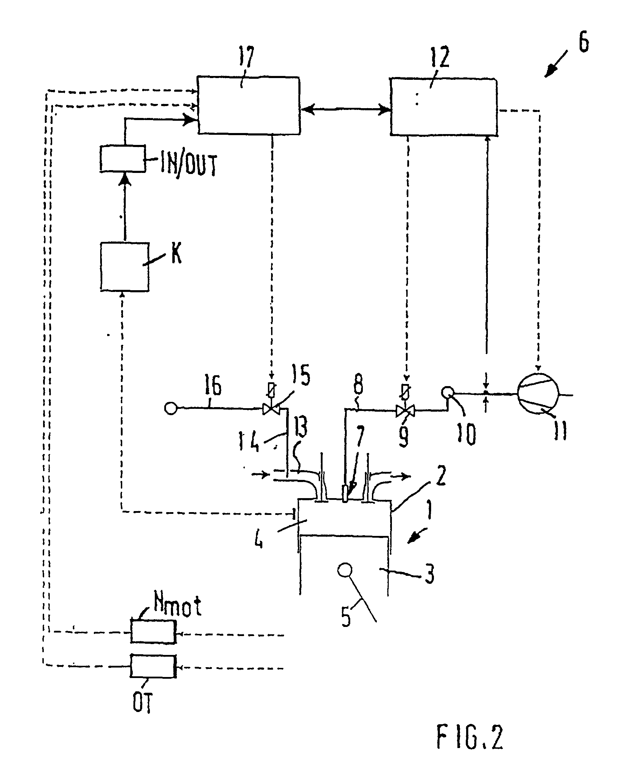

- Fig. 2: eine schematische Darstellung der wahlweisen Zuführung von Gas- und Dieselkraftstoff zu einem Diesel-Gasmotor (Common-Rail).

Ein Diesel-Gasmotor 1 umfaßt mehrere Zylinder 2 mit Kolben 3 und Brennräumen 4. Ein von einer nicht gezeigten Kurbelwelle betätigtes Pleuel 5 treibt im Zylinder 2 den Kolben 3 an. An der Brennkraftmaschine ist eine Einspritzanlage mit einem Einspritzventil 6 mit Einspritzdüsen 7 die in zwei Ebenen X-X, Y-Y angeordnete Öffnungen 19 bis 22 aufweisen und eine erste und eine zweite Stufe bilden. Die Öffnungen in der Einspritzdüse 7 können in bezug auf die beiden Ebenen auch auf Lücke angeordnet sein.

Das Einspritzventil 6 steht über eine Leitung 8 unter Zwischenschaltung eines Ventils 9 mit einem Common-Rail-System 10 in Verbindung. Über eine vorgeschaltete Pumpe 11 wird der Dieselkraftstoff dem Common-Rail-System entsprechend der Betriebsdaten aus der Steuereinheit 12 zugeführt.

Am Zylinderkopf mündet in einem Ansaugkanal 13 jeweils eine Leitung 14 zur Zuführung von gasförmigen Kraftstoff ein. Diese ist über ein Ventil 15 mit einer Gaszuführungsleitung 16 verbunden. Eine Zuführung der erforderlichen Gasmenge erfolgt in Abhängigkeit von Parametern des Motors im Betrieb und über die Steuereinheit 17.

Bei Motordrehzahl Nₘₒₜ in OT sowie mittels eines Klopfsensors K und einem In/Out Signal wird der Betriebszustand der Brennkraftmaschine festgestellt und entsprechend erfolgt bei Gasbetrieb sowie bei Dieselbetrieb der Betrieb der Brennkraftmaschine bzw. eine entsprechende Zuführung des Kraftstoffs.

Das Einspritzventil 6 umfaßt eine erste Ventilnadel 18, die von einer Hülse 19 als weitere Ventilnadel umgeben ist. In der Einspritzdüse 7 sind in den übereinander Ebenen X-X und Y-Y jeweils mehrere Öffnungen 19, 20 und 21 angeordnet. Die Öffnungen 21, 22 in der Ebene X-X werden von einem Ventilkegel 24a im Ventilsitz 24 und die Öffnungen 19, 20 werden über einen Ventilkegel 23a im Ventilsitz 23 abgeschlossen bzw. geöffnet.

Wenn die Brennkraftmaschine im Dieselbetrieb läuft, wird kein Gaskraftstoff zugeführt und über die Öffnungen 19 bis 22 der Einspritzdüse 7 wird Dieselkraftstoff in den Brennraum 4 eingespritzt. Diese Dieselbetrieb erfolgt mit bis zu 110% der Nennleistung und den für diese Betriebsart drehzahl- und lastabhängig optimierten Einspritzdruck. Die eigentliche Druckerzeugung erfolgt über nockenbetriebene Einspritzpumpen je Zylinder. Die Nockenhubkurven sind derart ausgelegt, daß zunächst eine Stufe (erste Stufe) aktiv ist und bei größeren Mengen bzw. Drücken die weitere Stufe (zweite Stufe) aktiviert wird.

Die Schließkraft der Ventilnadel der Stufe 1 kann durch eine Einstellfeder (nicht gezeigt) variabel sein. Somit ist bei Bedarf auch ein hoher Einspritzdruck für die erste Stufe erreichbar.

Wenn die Brennkraftmaschine nur im Gasbetrieb läuft wird in den Brennraum 4 über Öffnungen in der Einspritzdüse 7 einer Stufe ein Zündstrahl aus Dieselkraftstoff ≤ 1% eingespritzt. Bei diesem Gasbetrieb werden Emissionswerte erzielt, die niedriger sind als im Dieselbetrieb, insbesondere werden die NOx-Werte wesentlich herabgesetzt.

## Patentansprüche

1. Brennkraftmaschine zum wahlweisen Betrieb mit Dieselöl oder gasförmigen Kraftstoff über Einspritzpumpen mit Brennstoffeinspritzdüsen zur Direkteinspritzung über verteilte Düsenlöcher zur zweistufigen Brennstoffzuführung, **dadurch gekennzeichnet, daß** bei Gasbetrieb der gasförmige Brennstoff mit der Ladeluft zum Betrieb als Niederdruckgasmotor und zusätzlich ein Zündstrahl mit Dieselöl über eine in der Ebene (X-X bzw. Y-Y) liegende Stufe des Einspritzventils (6) zuführbar ist, wobei die Düsenlöcher (21, 22 bzw. 19, 20) dieser Stufe für den Zündstrahl im Bereich von 1% der Gesamtenergie bemessen sind und bei Dieselbetrieb ausschließlich Dieselöl über die Düsenlöcher (19 bis 22) der Brennstoffeinspritzdüse (7) beider Stufen zuführbar ist.

2. Brennkraftmaschine nach Anspruch 1, **dadurch gekennzeichnet, daß** die zweistufige Brennstoffzuführung über getrennte Steuerorgane den einzelnen Kraftstoffaustrittsbereichen zugeordnet sind und jeweils über einen Kegelsitz (23, 24) eine Abdichtung erfolgt, in dem ein Steuerorgan durch eine federbelastete Hülse (19) mit einem den Kegelsitz (24) zugeordneten Absperrkegel (24a) für den oberen Kraftstoffaustrittsbereich (Ebene X-X) gebildet, sowie eine federbelastete, sich abstützende Ventilnadel (18) mit einem Absperrkegel (23a) in der Hülse (19) konzentrisch angeordnet und einem Kegelsitz (23) im unteren Kraftstoffaustrittsbereich (Ebene Y-Y) zugeordnet ist und die Absperrkegel (23a, 24a) durch den im Druckraum herrschenden Druck steuerbar sind.

3. Brennkraftmaschine nach Anspruch 1, **dadurch gekennzeichnet, daß** die zweistufige Brennstoffzuführung über parallel angeordnete Brennstoffeinspritzventile erfolgt.

4. Brennkraftmaschine nach einem der Ansprüche 1 bis 3, **dadurch gekennzeichnet, daß** die Druckerzeugung durch nockenbetriebene Einspritzpumpen durchführbar ist, wobei über Hubkurven der Nocken die Zuführung für den Zündstrahl einer Stufe und für größere Mengen bzw. Drücken für die weitere Stufe zusätzlich betreibbar ist.

5. Brennkraftmaschine nach einem der Ansprüche 1 bis 4, **dadurch gekennzeichnet, daß** der Druckeinspritzverlauf über die einzelnen Stufen der Brennstoffeinspritzdüse (7) über ein Common-Rail-System (10) einstellbar ist.

6. Brennkraftmaschine nach einem der Ansprüche 1 bis 5, **dadurch gekennzeichnet, daß** elektrische Steuereinheiten (12, 17) zur betriebsabhängigen Steuerung des Gas- oder Dieselölbetriebs angeordnet sind, die mit Motor-Betriebsdaten versorgt werden.

7. Brennkraftmaschine nach einem der Ansprüche 1 bis 6, **dadurch gekennzeichnet, daß** die im Gasbetrieb nicht benutzte Stufe der Brennstoffeinspritzdüse (7) mit seinen Düsenlöchern periodisch zur Vermeidung einer Verkokung durch kurzzeitige Druckerhöhung entsprechend des Dieselbetriebs beaufschlagbar sind.

## Claims

1. Internal combustion engine for selective operation with diesel oil or gaseous fuel via injection pumps with fuel-injection nozzles for direct injection via distributed nozzle holes for a two-stage fuel feed, **characterised in that**, in the case of operation with gas, the gaseous fuel can be fed in with the charging air for operation as a low-pressure gas engine and, in addition, an ignition jet with diesel oil can be fed in via a stage of the injection valve (6), which stage lies in the plane (X-X or Y-Y), the nozzle holes (21, 22 or 19, 20) of the said stage being dimensioned for the ignition jet in the region of 1% of the total energy and, in the case of diesel operation, it is possible to feed in exclusively diesel oil via the nozzle holes (19 to 22) of the fuel injection nozzle (7) of both stages.

2. Internal combustion engine according to claim 1, **characterised in that** the two-stage fuel feed is associated, via separate control members, with the individual fuel outlet regions and sealing takes place, in each case, via a conical seat (23, 24) in which a control member is formed by a spring-loaded sleeve (19) with a shut-off cone (24a) for the upper fuel outlet region (plane X-X), which shut-off cone is associated with the conical seat (24), and a spring-loaded, self-supporting valve-needle (18) with a shut-off cone (23a) is disposed concentrically in the said sleeve (19) and associated with a conical seat (23) in the lower fuel outlet region (plane Y-Y), and the said shut-off cones (23a, 24a) can be controlled by the pressure prevailing in the pressure space.

3. Internal combustion engine according to claim 1, **characterised in that** the two-stage fuel feed takes place via fuel-injection valves disposed in parallel.

4. Internal combustion engine according to one of claims 1 to 3, **characterised in that** the generation of pressure can be performed by cam-operated injection pumps, it being possible, via lifting curves of the cams, to operate the feed for the ignition jet of one stage, and in an additional manner for greater quantities or pressures for the other stage.

5. Internal combustion engine according to one of claims 1 to 4, **characterised in that** the pressure-injection pattern over the individual stages of the fuel-injection nozzle (7) can be set via a common-rail system (10).

6. Internal combustion engine according to one of claims 1 to 5, **characterised in that** electrical control units (12, 17), which are supplied with engine operating data, are provided for controlling the gas or diesel-oil operation in an operation-dependent manner.

7. Internal combustion engine according to one of claims 1 to 6, **characterised in that** that stage of the fuel-injection nozzle (7) with its nozzle holes which is not used during gas operation can be periodically acted upon by a brief increase in pressure corresponding to diesel operation in order to avoid carbonisation.

## Revendications

1. Moteur à combustion interne pouvant fonctionner au choix avec du diesel ou un carburant sous forme de gaz injecté par l'intermédiaire de pompes à injection avec injecteurs destinés à l'injection directe via des orifices répartis en vue d'une alimentation de carburant sur deux niveaux, et **caractérisé en ce que**, en cas d'utilisation de gaz, le carburant sous forme de gaz avec air sous pression destiné au fonctionnement comme moteur à gaz basse pression ainsi qu'un jet de diesel destiné à l'allumage peuvent être acheminés via un niveau de l'injecteur (6) situé dans le plan (x-x ou Y-Y), les injecteurs (21, 22 ou 19, 20) de ce niveau étant tels que le jet d'allumage correspond à 1 % environ de l'énergie totale et qu'en cas de régime diesel, seul le diesel peut être acheminé via les orifices (19 à 22) de l'injecteur de carburant (7) des deux niveaux.

2. Moteur à combustion interne conforme à la revendication 1, **caractérisé en ce que** les alimentations de carburant sur les deux niveaux sont raccordées aux zones de sortie du carburant via des éléments de commande distincts et forment une fermeture par l'intermédiaire d'une embase conique comprenant un élément de commande par l'intermédiaire d'un boîtier élastique (19) avec cône d'arrêt (24a) solidaire de l'embase conique (24) dans la zone supérieure de sortie du carburant (plan X-X) ainsi qu'une aiguille de soupape (18) à ressort et en butée avec cône d'arrêt (23a) disposé de façon concentrique dans le boîtier (19) et solidaire d'une embase conique (23) dans la zone inférieure de sortie du carburant (plan Y-Y), les cônes d'arrêt (23a, 24a) pouvant être commandés par la pression agissant à l'intérieur de la chambre de pression.

3. Moteur à combustion interne conforme à la revendication 1, **caractérisé en ce que** l'alimentation de carburant se fait sur deux niveaux, par l'intermédiaire de soupapes d'injection de carburant parallèles.

4. Moteur à combustion interne conforme à l'une ou l'autre des revendications 1 à 3, **caractérisé en ce que** la pression peut être générée par des pompes à injection commandées par cames, les courbes d'élévation desdites cames pouvant assurer l'alimentation destinée au jet d'allumage sur un niveau ainsi qu'aux quantités ou pressions plus élevées sur l'autre niveau.

5. Moteur à combustion interne conforme à l'une ou l'autre des revendications 1 à 4, **caractérisé en ce que** la courbe de pression d'injection via les différents niveaux de l'injecteur (7) peut être réglée via un système 'Common Rail' (10).

6. Moteur à combustion interne conforme à l'une ou l'autre des revendications 1 à 5, **caractérisé en ce que** des unités électriques de commande (12, 17) du gaz ou du diesel avec caractéristiques de fonctionnement du moteur sont prévues.

7. Moteur à combustion interne conforme à une des revendications 1 à 6, **caractérisé en ce que** le niveau de l'injecteur de carburant (7) non utilisé sous régime de gaz et ses orifices peuvent être alimentés régulièrement pour éviter toute carbonisation par brève augmentation de la pression conformément à ce qui se produit sous régime diesel.
